(19) **Europäisches Patentamt**
**European Patent Office**
**Office européen des brevets**

(11) **EP 4 712 001 A1**

(12) **EUROPEAN PATENT APPLICATION**

(43) Date of publication:
**18.03.2026 Bulletin 2026/12**

(21) Application number: **25199248.3**

(22) Date of filing: **01.09.2025**

(51) International Patent Classification (IPC):
**G06Q 30/018** (2023.01)   **A01B 79/00** (2006.01)
**G06Q 50/02** (2024.01)   **G06V 20/10** (2022.01)

(52) Cooperative Patent Classification (CPC):
**G06Q 50/02; A01B 79/005; G06Q 30/018;**
**G06V 20/188**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **12.09.2024 IN 202421069145**

(71) Applicant: **Tata Consultancy Services Limited**
**Mumbai, Maharashtra 400 021 (IN)**

(72) Inventors:
• **MOHITE, Jayantrao**
**400601 Thane, Maharashtra (IN)**

• **SAWANT, Suryakant Ashok**
**411057 Pune (IN)**
• **SINGH, Dineshkumarjang Bahadur**
**400601 Thane (IN)**
• **PANDIT, Ankur**
**453112 Indore (IN)**
• **PAPPULA, Srinivasu**
**500034 Hyderabad (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND SYSTEM FOR SEED GENETIC PURITY ESTIMATION AND CROSS-POLLINATION DETECTION IN AGRICULTURAL FIELDS**

(57) Current approaches for cross pollination contamination detection mainly rely on field surveys that are generally costly and consumes lot of time. The genetic purity of seed estimation techniques needs specialized equipment which again are associated with high cost and longer time. Present disclosure provides method and system for genetic purity estimation and cross-pollination detection in agricultural fields. The system receives remote sensing, weather, historical and soil health data of region of interest. The system then uses data to calculate contamination score representing contamination due to cross pollination. Thereafter, system uses data to determine field suitability and stress score. Further, system detects deviations in crop characteristics indicative of off-types in and around region of interest based on data. Finally, system estimates genetic purity of seeds coming from crop plotted in region of interest based on contamination, field suitability and field stress score, and off-types to determine genetic purity of seed score.

FIG. 4

**Description**

CROSS-REFERENCE TO RELATED APPLICATIONS AND PRIORITY

The present application claims priority from Indian patent application no. 202421069145, filed on September 12, 2024

TECHNICAL FIELD

The disclosure herein generally relates to agricultural systems, and, more particularly, to a method and a system for seed genetic purity estimation and cross-pollination detection in agricultural fields using remote sensing and Geographic Information Systems (GIS).

BACKGROUND

Hybrid seed cultivation involves controlled cross-breeding of two genetically distinct parent plants to produce offspring with desirable traits. This process is widely practiced in agriculture to enhance crop yields, improve disease resistance, and enhance other agronomic characteristics. Hybrid seed cultivation plays a crucial role in modern agriculture by providing farmers with high-yielding crop varieties that exhibit uniformity, vigor, and improved quality. These hybrids are developed through careful selection and breeding techniques to meet the evolving demands of the agricultural industry.

While the hybrid seed cultivation offers many advantages, seed plots need critical monitoring to maintain genetic purity of seeds, for several aspects such as contamination by cross-pollination, suitability based on historical situation, stress such as biotic or abiotic stress, off-types etc.

Some methods that exist for estimating genetic purity of seeds are DNA Fingerprinting, Genotyping-by-Sequencing (GBS), Quantitative Polymerase Chain Reaction (qPCR), Grow-Out Tests, Cyto-genetic Techniques, Protein Profiling, and Next-Generation Sequencing. These techniques either need specialized equipment, or they are associated with high cost and longer time and are also limited to known genetic markers. Due to such challenges associated cost, time, domain expertise, large scale estimation of genetic purity of seeds is not possible.

SUMMARY

Embodiments of the present disclosure present technological improvements as solutions to one or more of the above-mentioned technical problems recognized by the inventors in conventional systems. For example, in one aspect, there is provided a processor implemented method for large-scale genetic purity estimation and cross-pollination detection in agricultural fields using remote sensing and Geographic Information Systems. The method comprises receiving, by a system via one or more hardware processors, a remote sensing data, a plurality of crop specific isolation distances, a weather data, a historical data and a soil health data of a region of interest; determining, by the system via the one or more hardware processors, a crop type and a crop variety of each crop plot of one or more crop plots present in a predefined radius of the region of interest based on the remote sensing data using a supervised classification technique; detecting, by the system via the one or more hardware processors, a plurality of phenological stages of a crop planted in each crop plot of the one or more crop plots present in the predefined radius of the region of interest based on the remote sensing data; classifying, by the system via the one or more hardware processors, the plurality of phenological stages of each crop based on one or more vegetation indices using a time-series based classification algorithm, wherein the one or more vegetation indices are predefined, and wherein a timing of flowering phenological stage is determined based on time-series based classification; checking, by the system via the one or more hardware processors, whether any other crop plot of a same crop type or same crop variety is present within a buffer zone created for the region of interest, wherein the buffer zone is created specific to a crop type or crop variety present in the region of interest based on the plurality of crop specific isolation distances; upon determining that at least one crop plot of the same crop type or same crop variety is present within the buffer zone, determining, by the system via the one or more hardware processors, a spatial isolation distance for the region of interest to check contamination due to same crop type or same crop variety within the buffer zone, wherein the determined spatial isolation distance is used to estimate a spatial distance score based on a predefined spatial distance score calculation technique; comparing, by the system via the one or more hardware processors, the timing of the flowering phenological stage of the at least one crop plot with same crop type or same crop variety present in the buffer zone, for identifying any timing overlap in the flowering phenological stage of the at least one crop plot with same crop type or same crop variety in the buffer zone; upon identifying the overlap in the flowering phenological stage, assessing, by the system via the one or more hardware processors, a temporal isolation distance for the region of interest, wherein the assessed temporal isolation distance is further utilized to determine a temporal isolation distance score based on a predefined temporal isolation distance score calculation technique; calculating, by the system via the one or more hardware processors, a pollen transfer probability for the region of interest based, at least in part, on the weather data and the remote sensing data, wherein a wind speed and a wind direction present in the weather data and distances between crop plots present outside the buffer zone are analyzed for calculating the pollen transfer probability, and wherein the distances between the crop plots present outside the buffer zone are calculated using the remote sensing data; detecting, by the system via the one or more hardware processors, a plurality of mechanical barriers that restrict pollen transfer between the one or more crop plots present around the region of interest based on the remote sensing data and the weather data, wherein one or more attributes of each mechanical barrier of the plurality of mechanical barriers are also determined; determining, by the system via the one or more hardware processors, a mechanical isolation distance score based, at least in part, on the one or more attributes, and the pollen transfer probability; and calculating, by the system via the one or more hardware processors, a contamination score representing contamination happened due to cross-pollination in the region of interest based on the spatial distance score, the temporal isolation distance score and the mechanical isolation distance score using a contamination score calculation technique.

In an embodiment, the method comprises: performing, by the system via the one or more hardware processors, a field suitability assessment for the region of interest based on the weather data, the historical data and the soil health data to determine a field suitability score (FSS) using a field suitability score estimation technique; performing, by the system via the one or more hardware processors, a field stress score assessment based on the remote sensing data and one or more ground surveys performed on the region of interest to determine a field stress score (FstS) using a field stress score assessment technique; detecting, by the system via the one or more hardware processors, one or more deviations in crop characteristics indicative of off-types in the crop planted in each crop plot present in the predefined radius of the region of interest based on the remote sensing data and a ground truth data using a trained convolutional neural network, wherein the ground truth data is predefined, and wherein the off-types detection lead to identification of one or more genetic anomalies that are present in the crop planted in each crop plot present in the predefined radius of the region of interest; and estimating, by the system via the one or more hardware processors, a genetic purity of seeds of the crop being cultivated on the crop plot in the region of interest based, at least in part, on the contamination score, the FSS score, the FstS score and the detected one or more deviations indicative of off-types to determine a genetic purity of seed score using a genetic purity score estimation technique.

In an embodiment, the method comprises: comparing, by the system via the one or more hardware processors, the genetic purity of seed score with a predefined genetic purity threshold; upon determining that the genetic purity of seed score is above the predefined genetic purity threshold, creating, by the system via the one or more hardware processors, a Non-Fungible Token (NFT) for each of one or more packets of seed cultivated in the region of interest; and generating, by the system via the one or more hardware processors, a genetic purity certificate for each of one or more packets of seed.

In an embodiment, wherein the remote sensing data comprises a satellite imagery or aerial photography of the region of interest, wherein the weather data comprises a historical, a current, and a future weather data of the region of interest, wherein the historical data comprises information about historical crop rotations, crop stresses that are observed due to crop rotations and management operations that are performed on the region of interest, and wherein the soil health data comprises a soil fertility details, pH level, and nutrient content information of soil present in the area of interest.

In another aspect, there is provided a system for large-scale genetic purity estimation and cross-pollination detection in agricultural fields using remote sensing and Geographic Information Systems. The system comprises a memory storing instructions; one or more communication interfaces; and one or more hardware processors coupled to the memory via the one or more communication interfaces, wherein the one or more hardware processors are configured by the instructions to: receive a remote sensing data, a plurality of crop specific isolation distances, a weather data, a historical data and a soil health data of a region of interest; determine a crop type and a crop variety of each crop plot of one or more crop plots present in a predefined radius of the region of interest based on the remote sensing data using a supervised classification technique; detect phenological stages of a crop planted in each crop plot of the one or more crop plots present in the predefined radius of the region of interest based on the remote sensing data; classify the phenological stages of each crop based on one or more vegetation indices using a time-series based classification algorithm, wherein the one or more vegetation indices are predefined, and wherein a timing of flowering phenological stage is determined based on time-series based classification; check whether any other crop plot of a same crop type or same crop variety is present within a buffer zone created for the region of interest, wherein the buffer zone is created specific to a crop type or crop variety present in the region of interest based on the plurality of crop specific isolation distances; upon determining that at least one crop plot of the same crop type or same crop variety is present within the buffer zone, determine a spatial isolation distance for the region of interest to check contamination due to same crop type or same crop variety within the buffer zone, wherein the determined spatial isolation distance is used to estimate a spatial distance score based on a predefined spatial distance score calculation technique; compare the timing of the flowering phenological stage of the at least one crop plot with same crop type or same crop variety present in the buffer zone, for identifying any timing overlap in the flowering phenological stage of the at least one crop plot with same crop type or same crop variety in the buffer zone; upon identifying the overlap in the flowering phenological stage, assess a temporal isolation distance for the region of interest, wherein the assessed temporal isolation distance is further utilized to determine a temporal isolation distance score based on a predefined temporal isolation distance score calculation technique; calculate a pollen transfer probability for the region of interest based, at least in part, on the weather data and the remote sensing data, wherein a wind speed and a wind direction present in the weather data and distances between crop plots present outside the buffer zone are analyzed for calculating the pollen transfer probability, and wherein the distances between the crop plots present outside the buffer zone are calculated using the remote sensing data; detect a plurality of mechanical barriers that restrict pollen transfer between the one or more crop plots present around the region of interest based on the remote sensing data and the weather data, wherein one or more attributes of each mechanical barrier of the plurality of mechanical barriers are also determined; determine a mechanical isolation distance score based, at least in part, on the one or more attributes, and the pollen transfer probability; and calculate a contamination score representing contamination happened due to cross-pollination in the region of interest based on the spatial distance score, the temporal isolation distance score and the mechanical isolation distance score using a contamination score calculation technique.

In yet another aspect, there are provided one or more non-transitory machine-readable information storage mediums comprising one or more instructions which when executed by one or more hardware processors cause a method for large-scale genetic purity estimation and cross-pollination detection in agricultural fields using remote sensing and Geographic Information Systems. The method comprises receiving, by a system, a remote sensing data, a plurality of crop specific isolation distances, a weather data, a historical data and a soil health data of a region of interest; determining, by the system, a crop type and a crop variety of each crop plot of one or more crop plots present a predefined radius of the region of interest based on the remote sensing data using a supervised classification technique; detecting, by the system, phenological stages of a crop planted in each crop plot of the one or more crop plots present in the predefined radius of the region of interest based on the remote sensing data; classifying, by the system, the phenological stages of each crop based on one or more vegetation indices using a time-series based classification algorithm, wherein the one or more vegetation indices are predefined, and wherein a timing of flowering phenological stage is determined based on time-series based classification; checking, by the system, whether any other crop plot of a same crop type or same crop variety is present within a buffer zone created for the region of interest, wherein the buffer zone is created specific to a crop type or crop variety present in the region of interest based on the plurality of crop specific isolation distances; upon determining that at least one crop plot of the same crop type or same crop variety is present within the buffer zone, determining, by the system, a spatial isolation distance for the region of interest to check contamination due to same crop type or same crop variety within the buffer zone, wherein the determined spatial isolation distance is used to estimate a spatial distance score based on a predefined spatial distance score calculation technique; comparing, by the system, the timing of the flowering phenological stage of the at least one crop plot with same crop type or same crop variety present in the buffer zone, for identifying any timing overlap in the flowering phenological stage of the at least one crop plot with same crop type or same crop variety in the buffer zone; upon identifying the overlap in the flowering phenological stage, assessing, by the system, a temporal isolation distance for the region of interest, wherein the assessed temporal isolation distance is further utilized to determine a temporal isolation distance score based on a predefined temporal isolation distance score calculation technique; calculating, by the system, a pollen transfer probability for the region of interest based, at least in part, on the weather data and the remote sensing data, wherein a wind speed and a wind direction present in the weather data and distances between crop plots present outside the buffer zone are analyzed for calculating the pollen transfer probability, and wherein the distances between the crop plots present outside the buffer zone are calculated using the remote sensing data; detecting, by the system, a plurality of mechanical barriers that restrict pollen transfer between the one or more crop plots present around the region of interest based on the remote sensing data and the weather data, wherein one or more attributes of each mechanical barrier of the plurality of mechanical barriers are also determined; determining, by the system, a mechanical isolation distance score based, at least in part, on the one or more attributes, and the pollen transfer probability; and calculating, by the system, a contamination score representing contamination happened due to cross-pollination in the region of interest based on the spatial distance score, the temporal isolation distance score and the mechanical isolation distance score using a contamination score calculation technique.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary representation of an environment related to at least some example embodiments of the present disclosure.
FIG. 2 illustrates an exemplary block diagram of a system for large-scale genetic purity estimation and cross-pollination detection in agricultural fields using remote sensing and Geographic Information Systems, in accordance with an embodiment of the present disclosure.

FIG. 3 is a schematic flow diagram representation illustrating a process followed by the system of FIGS. 1 and 2 to provide a seed purity certificate for hybrid seeds plotted in a seed plot, in accordance with an embodiment of the present disclosure.

FIG. 4 is a broad level flow diagram illustrating a process followed by the system of FIGS. 1 and 2 for detecting cross pollination and estimating genetic purity of seeds, in accordance with an embodiment of the present disclosure.

FIGS. 5A,5B and 5C illustrates an exemplary flow diagram of a method for large-scale genetic purity estimation and cross-pollination detection in agricultural fields using the system of FIGS. 1 and 2, in accordance with an embodiment of the present disclosure.

FIG. 6 is schematic block diagram representation of a process followed by the system of FIGS. 1 and 2 for generating a seed purity certificate for each packet of seed, in accordance with an embodiment of the present disclosure.

FIG. 7A is schematic representation of crop plots where spatial isolation is maintained, in accordance with an embodiment of the present disclosure.

FIG. 7B is schematic representation of crop plots where spatial isolation is not maintained, in accordance with an embodiment of the present disclosure.

FIG. 8A is a graphical representation of crop plots where temporal isolation is maintained, in accordance with an embodiment of the present disclosure.

FIG. 8B is a graphical representation of crop plots where temporal isolation is not maintained, in accordance with an embodiment of the present disclosure.

FIG. 9A is a schematic representation of crop plots where mechanical isolation is maintained, in accordance with an embodiment of the present disclosure.

FIG. 9B is a schematic representation of crop plots where mechanical isolation is not maintained, in accordance with an embodiment of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

As discussed earlier, hybrid seed cultivation offers multiple advantages. The many key advantages of hybrid seed cultivation are 1) Increased yield: Hybrids often exhibit hybrid vigor or heterosis, which results in superior yields compared to their parental lines. And this enhanced productivity translates to higher crop output per unit of land, contributing to improved farm profitability and food security, 2) Uniformity: Hybrid seeds produce plants that are more uniform in terms of growth, maturity, and other agronomic traits. This uniformity facilitates mechanized farming practices, simplifies crop management, and ensures consistency in crop performance, 3) Disease resistance: Many hybrid varieties are bred for improved resistance to pests, diseases, and environmental stresses. This trait reduces the reliance on chemical inputs, lowers production risks, and enhances crop resilience in challenging growing conditions, 4) Quality attributes: Hybrids often exhibit desirable quality attributes, such as uniform size, shape, color, and taste, making them preferred choices for both farmers and consumers. Enhanced post-harvest characteristics, shelf-life, and processing qualities contribute to market competitiveness and consumer acceptance, 5) Adaptability: Hybrid seeds can be tailored to specific agro-climatic conditions and cropping systems, allowing farmers to choose varieties suited to their local environments and production objectives. This adaptability enhances crop performance and ensures optimal resource utilization.

However, despite the advantages offered, hybrid seed plots need critical monitoring as they are more susceptible to contamination by cross-pollination. The cross-pollination introduces pollen from external sources, including neighboring plants of the same species, wild relatives, or other varieties/cultivars. This external pollen may carry different genetic traits or alleles that can alter the genetic composition of the offspring. Further, the unintended cross-pollination with other plants can result in genetic admixture, which compromises the purity of the hybrid seeds. In some cases, the cross-pollination can lead to genetic contamination of seed crops with pollen from genetically divergent sources. The contaminating pollen may introduce unwanted traits, off-types, or genetic variability, which reduces the genetic purity and uniformity of the seed lot. Hence, maintaining sufficient isolation distance and avoiding flowering period overlap is crucial for avoiding contamination by cross-pollination.

Existing approaches of cross pollination contamination detection mainly rely on field surveys or use of remote sensing. Field surveys are generally costly and consumes a lot of time. Further, the use of remote sensing is only limited to spatial isolation. However, combined consideration of spatial, temporal and mechanical isolation is needed to precisely detect the contamination by cross pollination.

Further, in addition to cross pollination, field suitability based on historical situation of a plot and region, impact of stresses such as biotic or abiotic stress and early detection of off-types is also crucial for maintaining genetic purity of the seeds.

So, a technique that can detect cross pollination by holistic consideration of spatial, temporal and mechanical isolation and can estimate genetic purity of seeds coming from a plot using in-direct and non-invasive methods is still to be explored.

Embodiments of the present disclosure overcome the above-mentioned disadvantages by providing a method and a system for large-scale genetic purity estimation and cross-pollination detection in agricultural fields using remote sensing and Geographic Information Systems. In particular, the system uses the remote sensing and proximal sensing based non-invasive approach to detect the possible contamination due to cross pollination which mainly occurs from the nearby regions. The system also estimates genetic purity of seeds coming from a region of interest/field by estimating field stress score due to biotic and abiotic factors, detecting off-types and assessing field suitability for particular types of seeds. In addition, the system enables generation of seeds NFT based on genetic purity and sustainability value of the seeds coming from the region of interest.

The system of the present disclosure first receives remote sensing data, crop specific isolation distances, weather data, historical data and soil health assessment data of a region of interest. The system then uses the remote sensing data to estimate crop plots, crop types and crop varieties of each crop plots present in a predefined radius of the region of interest and phenological stages of a crop planted in each crop plot. Then, the system determines a spatial isolation distance for the region of interest to check contamination due to same crop type or same crop variety. Thereafter, the system identifies any overlap in flowering periods between same crop type or variety by comparing flowering periods of one or more crop plots present in the predefined radius of the region of interest. Further, the system assess a temporal isolation distance for the region of interest based on identification of the overlap in flowering periods.

The system also calculates pollen transfer probability for the region of interest based on the weather data and the remote sensing data. Then, the system uses the pollen transfer probability and attributes of a plurality of mechanical barriers that restrict pollen transfer between the crop plots present around the region of interest to calculate a mechanical isolation distance. Further, the system calculates a contamination score representing contamination happened due to cross-pollination in the region of interest based on the spatial distance, the temporal isolation distance and the mechanical isolation distance using a contamination score calculation technique.

Thereafter, the system determines a field suitability score (FSS), and a field stress score (FstS) based on the weather data, the historical data, the soil health data and one or more ground surveys. The system then detects one or more deviations in crop characteristics indicative of off-types in the crop planted in each crop plot present in a predefined radius of the region of interest. The contamination score, the field suitability score, the field stress score and the detected one or more deviations indicative of off-types are used by the system to estimate a genetic purity of seeds of the crop being cultivated on the crop plot in the region of interest.

Additionally, the system creates a Non-Fungible Token (NFT) for each of one or more packets of seed cultivated in the region of interest

In the present disclosure, the system uses remote sensing technology, GIS analysis, and meteorological data to assess the risk of cross-pollination, which effectively mitigates cross pollination while ensuring robust contamination detection and seed quality assessment. The system also uses diverse factors, such as historical field suitability, stress assessment, and early detection of genetic anomalies using remote sensing and machine learning algorithms, thereby enhancing the accuracy and reliability of genetic purity estimation while providing valuable insights into the sustainability of seed production practices.

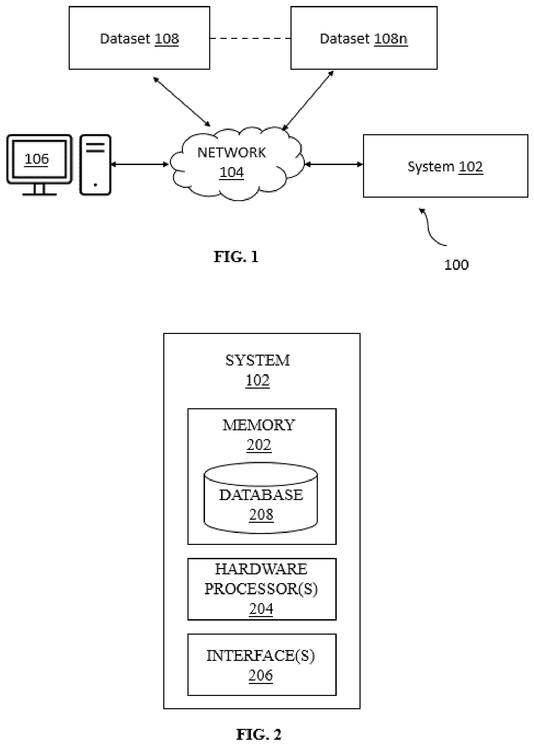

Referring now to the drawings, and more particularly to FIGS. 1 through 9B, where similar reference characters denote corresponding features consistently throughout the figures, there are shown preferred embodiments and these embodiments are described in the context of the following exemplary system and/or method.

FIG. 1 illustrates an exemplary representation of an environment 100 related to at least some example embodiments of the present disclosure. Although the environment 100 is presented in one arrangement, other embodiments may include the parts of the environment 100 (or other parts) arranged otherwise depending on, for example, detection of phenological stages of a crop, determination of spatial isolation distance for a region of interest, calculation of pollen transfer probability for the region of interest and so on. The environment 100 generally includes a system 102, an electronic device 106 (hereinafter also referred as a user device 106) and datasets 108a-108n, each coupled to, and in communication with (and/or with access to) a network 104. It should be noted that one user device is shown for the sake of explanation; there can be more number of user devices.

The network 104 may include, without limitation, a light fidelity (Li-Fi) network, a local area network (LAN), a wide area network (WAN), a metropolitan area network (MAN), a satellite network, the Internet, a fiber optic network, a coaxial cable network, an infrared (IR) network, a radio frequency (RF) network, a virtual network, and/or another suitable public and/or private network capable of supporting communication among two or more of the parts or users illustrated in FIG. 1, or any combination thereof.

Various entities in the environment 100 may connect to the network 104 in accordance with various wired and wireless communication protocols, such as Transmission Control Protocol and Internet Protocol (TCP/IP), User Datagram Protocol (UDP), 2nd Generation (2G), 3rd Generation (3G), 4th Generation (4G), 5th Generation (5G) communication protocols, Long Term Evolution (LTE) communication protocols, or any combination thereof.

The user device 106 is associated with a user (e.g., agriculturist or farmer) who wants to estimate genetic purity of seeds coming from a crop plotted in seed plot (hereinafter also referred as a plot or a field). Examples of the user device 106 include, but are not limited to, a personal computer (PC), a mobile phone, a tablet device, a Personal Digital Assistant (PDA), a server, a voice activated assistant, a smartphone, and a laptop.

The datasets 108a-108n can be publicly available datasets, or customized datasets prepared for experimentation purposes. The datasets 108a-108n, where n can be any number, may comprise a remote sensing data (high-resolution satellite imagery, multispectral and hyperspectral imagery or aerial photography, and NDVI time series data), meteorological data (historical, current and future weather data including wind speed, wind direction, temperature, precipitation, and humidity), soil health data (soil health assessments, soil sampling data, soil fertility, ph levels, and nutrient content), historical data (historical crop rotations, crop stresses that are observed due to crop rotations and management operations, field management practices, environmental conditions), crop phenology data (temporal remote sensing data for determining crop phenological stages), field boundaries and geographic data (geo-referenced boundaries of seed plots, geographical location data), and agricultural knowledge-based data (information on crop-specific isolation distances, buffer distances, flowering periods, etc.).

The system 102 includes one or more hardware processors and a memory. The system 102 is configured to perform one or more of the operations described herein. The system 102 is configured to receive a remote sensing data, a plurality of crop specific isolation distances, a weather data, a historical data and a soil health data of a region of interest from datasets, such as the datasets 108a-108n via the network 104. In an embodiment, the system 102 may receive the information about the region of interest from a user device, such as the user device 106.

The system 102 then uses the remote sensing data, the crop specific isolation distances, and the weather data to calculate a contamination score representing possible contamination due to cross pollination from the nearby crop plots around the region of interest. Thereafter, the system 102 uses the remote sensing data, the weather data, the historical data and the soil health data to determine a field suitability score and a field stress score. Further, the system 102 detects one or more deviations in crop characteristics indicative of off-types in crop planted in each crop plot present in the predefined radius of the region of interest based on the remote sensing data and a ground truth data. Finally, the system 102 estimates genetic purity of seeds coming from crop plotted in the region of interest based on the contamination score, the field suitability score, the field stress score and the detected one or more deviations indicative of off-types to determine a genetic purity of seed score.

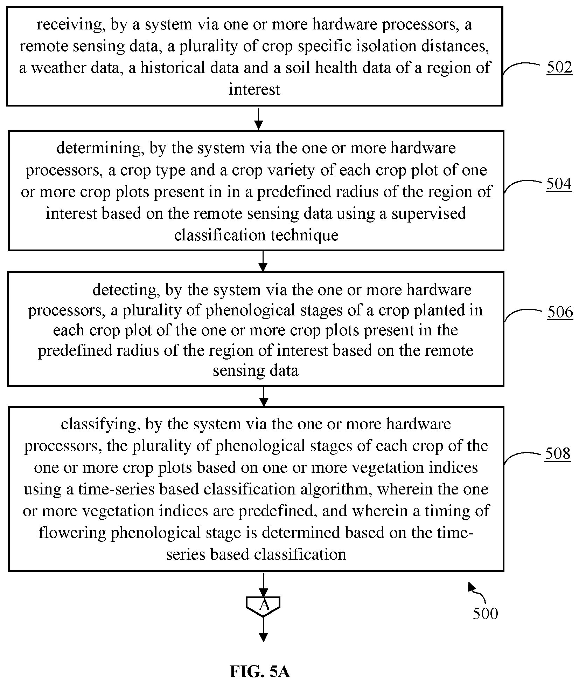

Additionally, the system 102 creates a Non-Fungible Token (NFT) for each of the one or more packets of seed and associated genetic purity certificate. The process of calculation of contamination score and the genetic purity of seed score is explained in detail with reference to FIGS. 5A-5C.

The number and arrangement of systems, devices, and/or networks shown in FIG. 1 are provided as an example. There may be additional systems, devices, and/or networks; fewer systems, devices, and/or networks; different systems, devices, and/or networks; and/or differently arranged systems, devices, and/or networks than those shown in FIG. 1. Furthermore, two or more systems or devices shown in FIG. 1 may be implemented within a single system or device, or a single system or device shown in FIG. 1 may be implemented as multiple, distributed systems or devices. Additionally, or alternatively, a set of systems (e.g., one or more systems) or a set of devices (e.g., one or more devices) of the environment 100 may perform one or more functions described as being performed by another set of systems or another set of devices of the environment 100 (e.g., refer scenarios described above).

FIG. 2 illustrates an exemplary block diagram of a system 102 for large-scale genetic purity estimation and cross-pollination detection in agricultural fields, in accordance with an embodiment of the present disclosure.

In some embodiments, the system 102 is embodied as a cloud-based and/or SaaS-based (software as a service) architecture. In some embodiments, the system 102 may be implemented in a server system. In some embodiments, the system 102 may be implemented in a variety of computing systems, such as laptop computers, notebooks, hand-held devices, workstations, mainframe computers, and the like.

In an embodiment, the system 102 includes one or more processors 204, communication interface device(s) or input/output (I/O) interface(s) 206, and one or more data storage devices or memory 202 operatively coupled to the one or more processors 204. The one or more processors 204 may be one or more software processing modules and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 102 can be implemented in a variety of computing systems, such as laptop computers, notebooks, hand-held devices, workstations, mainframe computers, servers, a network cloud and the like.

The I/O interface device(s) 206 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 202 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment a database 208 can be stored in the memory 202, wherein the database 208 may comprise, but are not limited to, one or more vegetation indices, a plurality of crop specific isolation distances, a predefined genetic purity threshold, a predefined spatial distance score calculation technique, a predefined temporal isolation distance score calculation technique, a contamination score calculation technique, a field stress score assessment technique, a field stress score assessment technique, a genetic purity score estimation technique, one or more processes and the like. In an embodiment, the memory 202 may store information pertaining to training samples, plug and play language modeling technique, token selection criteria, and the like. The memory 202 further comprises (or may further comprise) information pertaining to input(s)/output(s) of each step performed by the systems and methods of the present disclosure. In other words, input(s) fed at each step and output(s) generated at each step are comprised in the memory 202 and can be utilized in further processing and analysis.

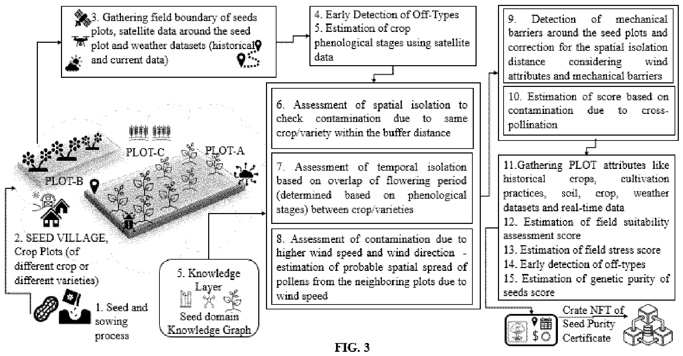

FIG. 3, with reference to FIGS, 1-2, is a schematic flow diagram representation illustrating a process followed by the system 102 of FIGS. 1 and 2 to provide a seed purity certificate for hybrid seeds plotted in a seed plot, in accordance with an embodiment of the present disclosure.

As seen in FIG. 3, at first, a seed sowing process is performed in a crop plot present in a region of interest. It should be noted that the crop plot can be a small part of a seed village where a plurality of crop plots of different crop or different varieties are present. Once the seed sowing process is completed, different types of data, such as the remote sensing data, the weather data, the historical data and the soil health data of a region of interest is collected using a plurality of techniques. The received data is the provided to the system 102.

The system 102 then identify phenological stages of a crop planted in each crop plot and one or more deviations in crop characteristics indicative of off-types in the crop planted in each crop plot present in the predefined radius of the region of interest based on the received data.

Then, the system 102 creates a buffer zone specific to the crop type present in the area of interest from a centroid of the area of interest by accessing a knowledge base, such as the database 208. The knowledge base stores information pertaining to buffer distances for each crop type. In particular, the crop specific isolation distances are accessed to create the buffer zone specific to a crop type or crop variety present in the region of interest.

Thereafter, the system 102 assess spatial isolation distance to check contamination due to same crop/variety within the buffer zone, temporal isolation based on overlap of flowering period (determined based on phenological stages) between crop/varieties, and contamination due to higher wind speed and wind direction (determined based on the weather data).

Further, the system 102 detects mechanical barriers, such as tall trees, other installations like power transmission tower around the seed plots and make correction in the spatial isolation distance considering the wind attributes and the mechanical barriers. The system 102 then calculates a contamination score representing contamination happened due to cross-pollination in the area of interest based on the corrected spatial distance, a temporal isolation distance, and a mechanical isolation distance.

Once the contamination score is available, the system 102 estimates the field suitability score and the field stress score. The system 102 then uses the contamination score, the field suitability score, the field stress score and the detected off types to estimate genetic purity of seeds score.

Additionally, the system 102 creates a Non-Fungible Token (NFT) for each of one or more packet of seed cultivated in the region of interest and generates a genetic purity certificate for each packet.

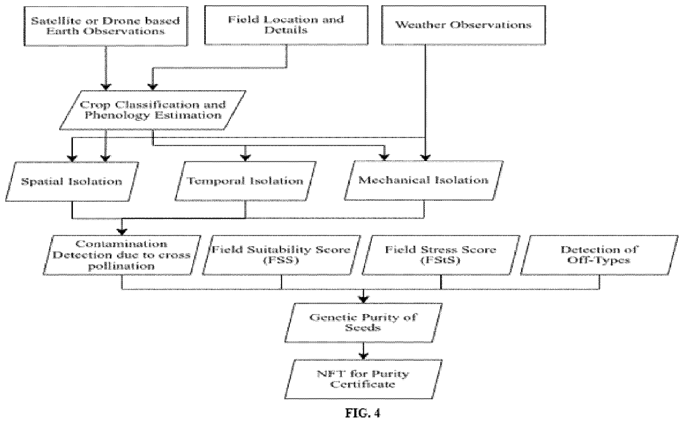

FIG. 4, with reference to FIGS, 1-3, is a broad level flow diagram illustrating a process followed by the system 102 of FIGS. 1 and 2 for detecting cross pollination and estimating genetic purity of seeds, in accordance with an embodiment of the present disclosure.

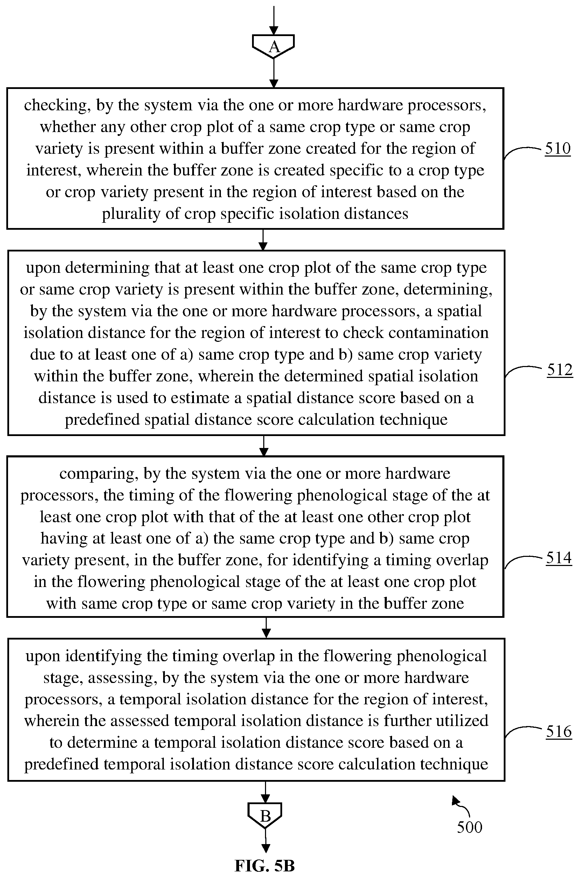

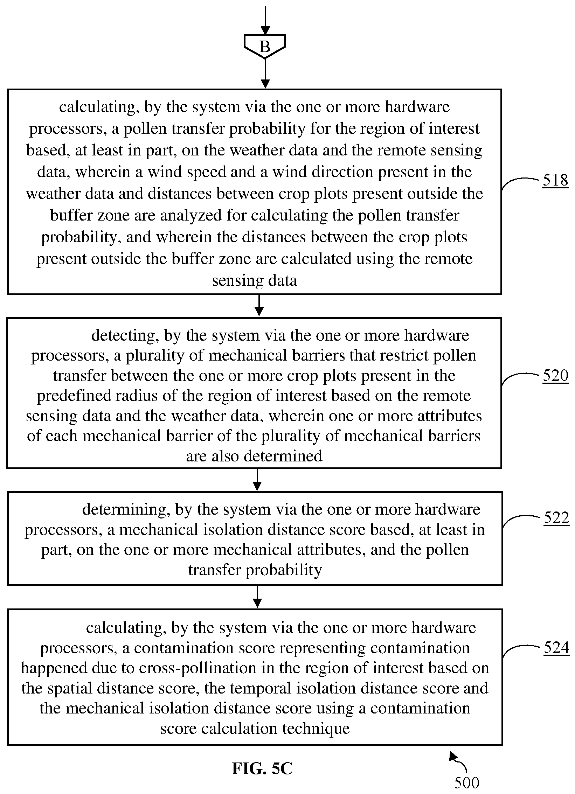

FIGS. 5A, 5B and 5C, with reference to FIGS. 1 to 4, illustrate an exemplary flow diagram of a method 500 for a large-scale genetic purity estimation and cross-pollination detection in agricultural fields, in accordance with an embodiment of the present disclosure. In an embodiment, the system 102 comprises one or more data storage devices or the memory 202 operatively coupled to the one or more hardware processors 204 and is configured to store instructions for execution of steps of the method 500 by the one or more hardware processors 204. The steps of the method 500 of the present disclosure will now be explained with reference to the components of the system 102 as depicted in FIG. 2, and the flow diagram in FIGS. 5A to 5C.

At step 502 of the method of the present disclosure, the one or more hardware processors 204 of the system 102 receive a remote sensing data, a plurality of crop specific isolation distances, a weather data, a historical data and a soil health data of a region of interest. The system 102 may receive data from the datasets 108a to 108n or may receive from the user device 106. In an embodiment, the remote sensing data is captured using high-resolution cameras that are capable of capturing detailed imagery of crop fields. The detailed imagery captured by the high-resolution cameras is then analyzed using a remote sensing analysis software/ GIS Software to provide the remote sensing data.

In an embodiment, the remote sensing data includes a satellite imagery or aerial photography of the region of interest. The weather data includes a historical, a current, and a forecasted weather data of the region of interest. The historical data includes information about historical crop rotations, crop stresses that are observed due to crop rotations and management operations that are performed on the region of interest. The soil health data includes a soil fertility details, pH level, and nutrient content information of soil present in a crop plot residing in the area of interest.

In an embodiment, the plurality of crop specific isolation distances are initially provided by the subject matter experts (SMEs). However, as the system 102 matures over a period of time, the system 102 may automatically update the plurality of crop specific isolation distances based on training on the data observed over a plurality of crop plots.

At step 504 of the present disclosure, the hardware processors 204 of the system 102 determines a crop type and a crop variety of each crop plot of one or more crop plots present in a predefined radius of the region of interest based on the remote sensing data using a supervised classification technique. In an embodiment, the system 102 utilizes the remote sensing data to derive a map of crop types and crop varieties present in the predefined radius of the region of interest using supervised classification technique, such as a Maximum Likelihood Classification technique or a Random Forest technique. It should be noted that the predefined radius can be defined by an administrator or a subject matter expert.

At step 506 of the present disclosure, the hardware processors 204 of the system 102 detect a plurality of phenological stages of a crop planted in each crop plot of the one or more crop plots present in the predefined radius of the region of interest based on the remote sensing data.

At step 508 of the present disclosure, the hardware processors 204 of the system 102 classify the plurality of phenological stages of each crop based on one or more vegetation indices using a time-series based classification algorithm. The one or more vegetation indices are predefined. In particular, a timing of flowering phenological stage is determined based on time-series based classification.

At step 510 of the present disclosure, the hardware processors 204 of the system 102 check whether any other crop plot of a same crop type or same crop variety is present within a buffer zone created for the region of interest. In an embodiment, the buffer zone is created specific to a crop type or a crop variety present in a crop plot available in the region of interest considering factors like pollen dispersal distance and crop characteristics. The buffer zone is created from a centroid of the crop plot based on a crop specific isolation distance provided for a specific crop planted in the crop plot.

In particular, the system 102 checks if there is any other crop of the same type/variety is present within the created buffer zone as this may indicate a risk of cross-pollination.

At step 512 of the present disclosure, upon determining that at least one crop plot of the same crop type or same crop variety is present within the buffer zone, the hardware processors 204 of the system 102 determine a spatial isolation distance for the region of interest to check contamination due to same crop type or same crop variety within the buffer zone. The determined spatial isolation distance is then used by the system 102 to estimate a spatial distance score based on a predefined spatial distance score calculation technique. In an embodiment, as part of the predefined spatial distance score calculation technique, the system 102 first measures the spatial isolation distance (sd) by calculating Euclidean distance between two neighboring crop plots in context of contamination risk. Then, the system 102 subtracts the spatial isolation distance from a predefined spatial isolation distance threshold. Thereafter, the system 102 divides the obtained subtracted value by 100 to generate the spatial isolation distance score (sds) in a range of 0 to 5 where '5' represents no or minimal distance, and '0' represents a maximum distance (ranging towards infinite or no-overlap or within safe distance or limit).

At step 514 of the present disclosure, the hardware processors 204 of the system 102 compare the timing of the flowering phenological stage of the at least one crop plot with that of the at least one other crop plot having at least one of a) the same crop type and b) same crop variety present in the buffer zone, for identifying any timing overlap in the flowering phenological stage of the at least one crop plot with same crop type or same crop variety in the buffer zone.

At step 516 of the present disclosure, the hardware processors 204 of the system 102 assess a temporal isolation distance for the region of interest, upon identifying the overlap in timing of the flowering phenological stage. The system 102 then uses the assessed temporal isolation distance to determine a temporal isolation distance score based on a predefined temporal isolation distance score calculation technique. In an embodiment, as part of the temporal isolation distance score calculation technique, the system 102 first obtains the temporal isolation distance by calculating a difference between crop age days of two neighboring crop plots. Then, the system 102 subtracts the obtained temporal isolation distance from a predefined temporal isolation distance threshold. Thereafter, the system 102 divides the obtained subtracted value by 100 to generate a temporal isolation distance score (tds) in the range of 0 to 5 each, where '5' represents no or minimal distance, and '0' represents a maximum distance (ranging towards infinite or no-overlap or within safe distance or limit).

At step 518 of the present disclosure, the hardware processors 204 of the system 102 calculate a pollen transfer probability for the region of interest based, at least in part, on the weather data and the remote sensing data. In particular, first, the distances between the crop plots present outside the buffer zone are calculated using the remote sensing data. Then, the system 102 analyzes a wind speed and a wind direction (present, past and forecasted) present in the weather data and distances between crop plots present outside the buffer zone for calculating the pollen transfer probability.

At step 520 of the present disclosure, the hardware processors 204 of the system 102 detect a plurality of mechanical barriers that restrict pollen transfer between the one or more crop plots present around the region of interest based on the remote sensing data and the weather data. The plurality of mechanical barriers include, but are not limited to, tall trees, hedgerows, or structures, such as power transmission towers. In an embodiment, the system 102 also determines one or more attributes, such as height and width of each mechanical barrier of the plurality of mechanical barriers.

At step 522 of the present disclosure, the hardware processors 204 of the system 102 determine a mechanical isolation distance score based, at least in part, on the one or more attributes, and the pollen transfer probability. In particular, the one or more attributes of the mechanical barriers relative to our crop plots allows the system 102 to assess the effectiveness of the mechanical barriers in preventing pollen dispersal, considering barrier density and orientation in relation to prevailing wind directions. So, this effectiveness is considered for determining the mechanical isolation distance score.

In at least one example embodiment, for determining the mechanical isolation distance score, the system 102 first estimate an adjusted spatial isolation distance score using a machine learning model. In one embodiment, the machine learning model is first trained using an adjusted spatial isolation distance, the wind speed, the wind direction, and a distance of the field from the mechanical barriers etc. as a target variable, to provide the adjusted spatial isolation distance.

Once the adjusted spatial isolation distance is available, the system 102 measures the mechanical isolation distance (msd) by calculating Euclidean distance between two neighboring crop plots in context of contamination risk. Then, the system 102 subtracts the mechanical isolation distance from a predefined mechanical isolation distance threshold. Thereafter, the system 102 divides the obtained subtracted value by 100 to generate the mechanical isolation distance score (mds) in a range of 0 to 5 where '5' represents no or minimal distance, and '0' represents a maximum distance (ranging towards infinite or no-overlap or within safe distance or limit.

At step 524 of the present disclosure, the hardware processors 204 of the system 102 calculate a contamination score representing contamination happened due to cross-pollination in the region of interest based on the spatial distance score, the temporal isolation distance score and the mechanical isolation distance score using a contamination score calculation technique.

In an embodiment, the contamination score calculation technique assumes that a value of each of the distance score i.e., the spatial isolation distance score (sds), the temporal isolation distance score (tds), and the mechanical isolation distance score (mds) in the range of 0 to 5 each, where '5' represents no or minimal distance, and '0' represents a maximum distance (ranging towards infinite or no-overlap or within safe distance or limit). Then, the system 102 calculates the contamination score as a weighted function f (sds, tds, and mds), where weights can be initiated to 1 and can be automatically updated later using AI/ML based learning of the influence of one or more components for the region of interest. It should be noted that the scores or probabilities to each area of interest is assigned based on the calculated degree of spatial, temporal, and mechanical isolation, with higher scores indicating greater contamination risk.

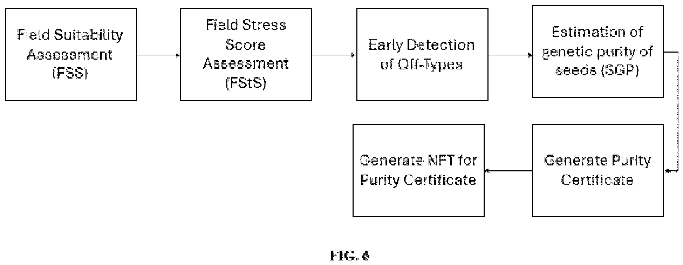

FIG. 6 illustrates a schematic block diagram representation of a process followed by the system 102 of FIGS. 1 and 2 for generating a purity certificate for each packet of seed, in accordance with an embodiment of the present disclosure, in accordance with an embodiment of the present disclosure.

As seen in FIG.6, the system 102 first performs a field suitability assessment for the region of interest based on the weather data, the historical data and the soil health data to determine a field suitability score (FSS) using a field suitability score estimation technique.

The system 102 can gain valuable insights into the field's/plot's suitability by analyzing historical crop rotations, soil management practices, and environmental conditions. If the historical analysis is combined with soil sampling and spectroscopy, the system 102 can assess the soil fertility, pH levels, and nutrient content accurately. Additionally, the climate monitoring and weather data provides critical information on temperature, precipitation, and humidity levels, which further helps the system 102 in understanding climatic conditions impacting field/plot suitability. So, if these factors are integrated and appropriate weights are assigning, the system 102 can effectively evaluate the suitability of the crop plot/field for seed cultivation which further ensures genetic purity of seeds coming from the crop plot/field.

In an embodiment, the field suitability score estimation technique assumes 'H' as a historical analysis score, 'S' as a soil health score, 'C' as a climate monitoring score, and WH, WS and WC represents the weights assigned to each of these score, respectively. The field suitability score (FSS) is calculated as:

$$FSS = (WH \times H) + (WS \times S) + (WC \times S)$$

In an embodiment, the soil health score is calculated by soil sampling and spectroscopy to estimate the soil health on given parameters, such as a weighted sum of soil fertility (0 = not fertile, 3 = low fertile, 5 = fertile), pH levels (<=7 not suitable, 7=suitable, >7=not suitable), and nutrient content (value =1, if each of the 14 nutrient parameters are above their minimum threshold values as per knowledge graph or zero).

In an embodiment, the climate monitoring score is calculated by monitoring climate and weather data as both of them provide critical information on temperature, precipitation, and humidity levels, which further helps in determining the climatic conditions impacting field/plot suitability. In particular, for every crop, there is a suitable (minimum/avg./maximum temperature range, cumulative and average rainfall during the production season, average and min./max of the windspeed, etc.). The current and average of previous one-week's parameter values is considered and then compared with predefined threshold values. Thereafter, a score of 1 is assigned if all the values are within the predefined threshold values or a score of zero is assigned to climate monitoring score.

In an embodiment, a cumulative analysis score for each week is generated based on the weightage average of the soil health score and climate monitoring score. And this weekly output is considered as the historical analysis score.

Once the field suitability score is available, the system 102 performs field stress score assessment based on the remote sensing data and one or more ground surveys performed on the region of interest to determine a field stress score (FstS) using a field stress score assessment technique.

In an embodiment, the system 102 analyzes the remote sensing data to monitor vegetation health indicators, such as normalized difference vegetation index (NDVI) and chlorophyll content which provides insights into overall crop stress levels. Thereafter, the system 102 uses the thermal imagery to identify heat stress and assess canopy temperature as an indicator of water stress. The system 102 then integrates the remote sensing techniques with ground surveys to identify pests, diseases, and weeds, which further helps in developing a comprehensive understanding of field stress. Further, if the severity scores are assigned based on the detected stress levels, the impact of biotic and abiotic stresses on the genetic purity can be quantified accurately.

In at least one example embodiment, the field stress score assessment technique assume 'W' as a canopy water stress score, 'PD' as the pest disease stress score, 'ND' as the nutrient deficiency score, and $W_w$, $W_{PD}$ and $W_{ND}$ are the weights to each of these scores. Then, the field stress score (FStS) is calculated as:

$$FStS = (WW \times W) + (WPD \times PD) + (WND \times ND)$$

In an embodiment, the canopy water stress score 'W' is generated from Canopy Water Content (CWC), which is derived from various spectral indices, such as but are not limited to, Moisture Stress Index (MSI), Normalized Difference Infrared Index (NDII), Normalized Difference Water Index (NDWI), Normalized Multi-band Drought Index (NMDI), Water Band Index (WBI), Leaf Water Content Index, and Leaf Area Index (LAI). A value of 0 to 1 is assigned to 'W', where 0 means the absence of the canopy water stress and 1 means the presence of the water stress.

Thereafter, the system 102 detects one or more deviations in crop characteristics indicative of off-types in the crop planted in each crop plot present in the predefined radius of the region of interest based on the remote sensing data and a ground truth data using a trained convolutional neural network. The ground truth data is predefined. The trained convolutional neural network classifies plants as either on-type or off-type based on extracted spectral and morphological features. In particular, the off-types detection lead to identification of one or more genetic anomalies that are present in the crop planted in each crop plot present in the predefined radius of the region of interest, which further helps in mitigating the risk of contamination and maintaining genetic purity effectively.

Further, the system 102 estimates a genetic purity of seeds of the crop being cultivated on the crop plot in the region of interest based, at least in part, on the contamination score, the FSS score, the FstS score and the detected one or more deviations indicative of off-types (EDOT) to determine a genetic purity of seed score using a genetic purity score estimation technique.

In an embodiment, the genetic purity score estimation technique comprises assigning weights to each factor based on their relative importance in determining genetic purity. The weights can be determined through expert judgment, stakeholder consultation, or statistical analysis. For example, if factor A (Contamination due to cross-pollination - CCP) is deemed to have the highest impact on genetic purity, it may be assigned a higher weight as compared to Factors FSS, FStS, and EDOT.

Thereafter, as part of the genetic purity score estimation technique, the factor values are normalized. As the factors can be measured on different scales, it becomes essential to normalize the factor values to bring them onto a comparable scale. So, to ensures that factors with larger numerical ranges do not disproportionately influence the overall genetic purity score, the system 102 normalizes each factor value by dividing each observation by its maximum value or using z-score normalization to standardize the values.

Further, a weighted score is calculated for each factor by multiplying each normalized factor value by its corresponding weight to calculate the weighted score for that factor. For example, if the normalized values for factors CCP, FSS, FStS, and EDOT are represented as CCPn, FSSn, FStSn and EDOTn respectively, and their corresponding weights are $W_{CCP}$, $W_{FSS}$, $W_{FStS}$, $W_{EDOT}$, then the weighted scores $S_{CCP}$, $S_{FSS}$, $S_{FStS}$, $S_{EDOT}$ are calculated as

$$S_{CCP} = CCPn \times W_{CCP}$$

$$S_{FSS} = FSSn \times W_{FSS}$$

$$S_{FStS} = FStSn \times W_{FStS}$$

$$S_{EDOT} = EDOTn \times W_{EDOT}$$

Finally, the weighted scores are combined for each factor to obtain the genetic purity of seed score. This is done either by taking the sum or an average of the weighted scores. For example, if we take the sum of the weighted scores $S_{CCP}$, $S_{FSS}$, $S_{FStS}$, and $S_{EDOT}$, the overall genetic purity score $S_{GP}$ can be calculated as:

$$S_{GP} = S_{CCP} + S_{FSS} + S_{FStS} + S_{EDOT}$$

Once the genetic purity of seed score is available, the system 102 compares the genetic purity of seed score with a predefined genetic purity threshold. In case the genetic purity of seed score is found to be lower than the predefined genetic purity threshold, the one or more packets of seed cultivated in the region of interest may be considered of low quality and should not be considered for further seed certification process.

Upon determining that the genetic purity of seed score is above the predefined genetic purity threshold, the system 102 creates a Non-Fungible Token (NFT) for each of one or more packets of seed cultivated in the region of interest. The NFT includes a metadata, crop details such as a crop variety and a crop type, age at maturity, geo-referenced location of the crop plot, historical information of weather and farm operations, an above-ground biomass (AGB), an individual factor purity score, a combined weighted score, and the genetic purity of seed score. The system also generates a genetic purity certificate for each of one or more packets of seed bearing a QR code generated by encoding all above meta data and NFT details.

In an embodiment, the seed packets produced off the crop plot may have a unique farm value, a seed packet number, and details of each factor score and the combined weighted score.

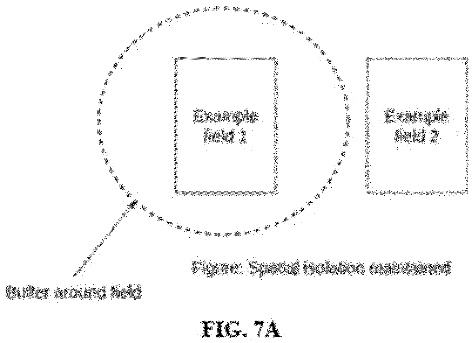

FIG. 7A illustrates a schematic representation of crop plots where spatial isolation is maintained, in accordance with an embodiment of the present disclosure.

As seen in FIG. 7A, an example field 2 is at a distance from a buffer zone created around an example field 1, thus maintaining the spatial isolation between the two fields.

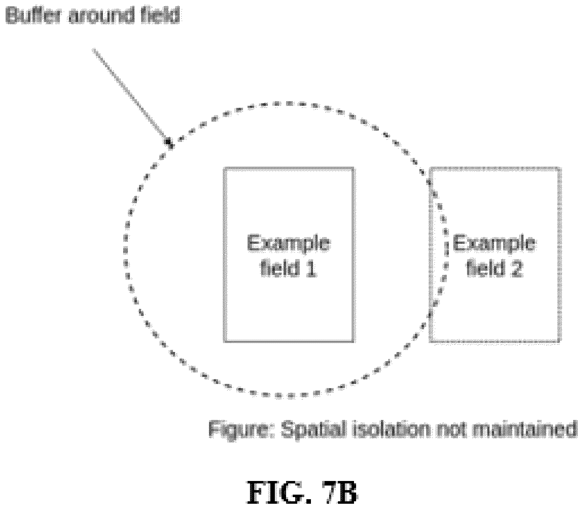

FIG. 7B illustrates a schematic representation of crop plots where spatial isolation is not maintained, in accordance with an embodiment of the present disclosure.

As seen in FIG. 7B, an example field 2 is coming under the buffer zone created around an example field 1, thus required spatial isolation is not maintained between the two fields.

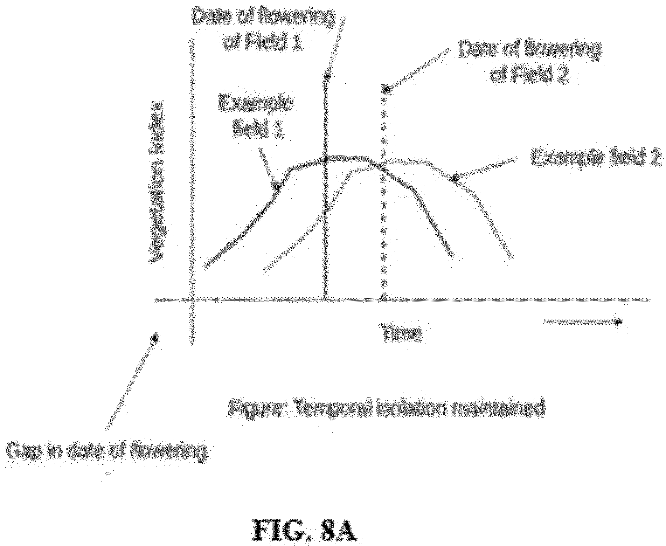

FIG. 8A illustrates a graphical representation of crop plots where temporal isolation is maintained, in accordance with an embodiment of the present disclosure.

As seen in FIG. 8A, the time of flowering for field 2 is coming much after the time of flowering for field 1, thus the required temporal isolation is maintained between the two fields.

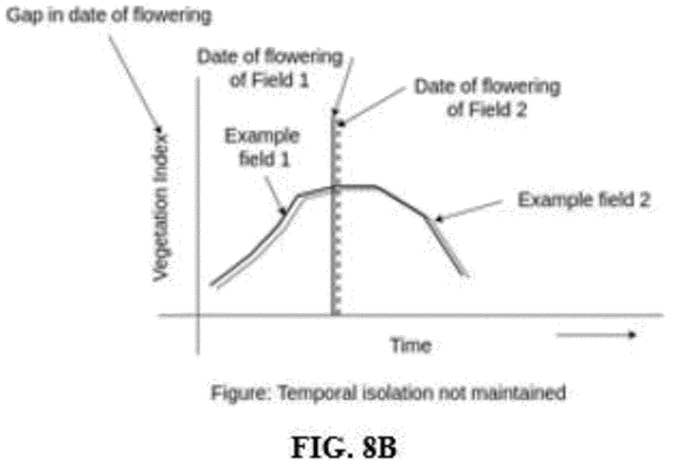

FIG. 8B illustrates a graphical representation of crop plots where temporal isolation is not maintained, in accordance with an embodiment of the present disclosure.

As seen in FIG. 8B, the time of flowering for field 2 is coming at the same time as of the flowering period of field 1, thus the required temporal isolation is not maintained between the two fields.

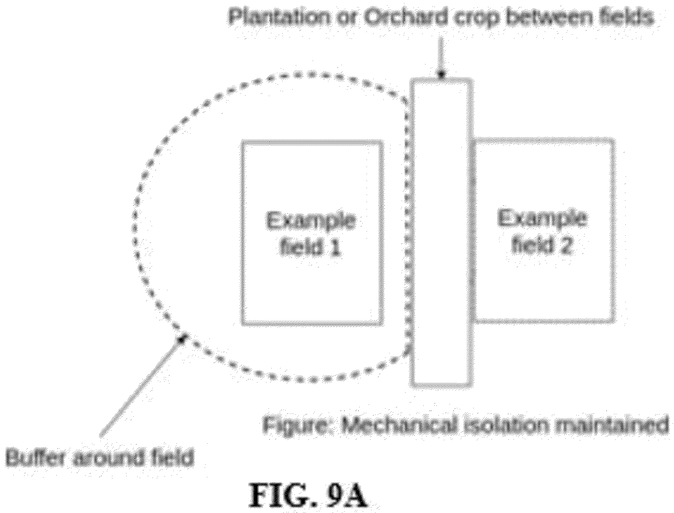

FIG. 9A illustrates a schematic representation of crop plots where mechanical isolation is maintained, in accordance with an embodiment of the present disclosure.

As seen in FIG. 9A, a plantation or an orchard crop is fully coming between the two fields, thus maintaining the mechanical isolation between the two fields.

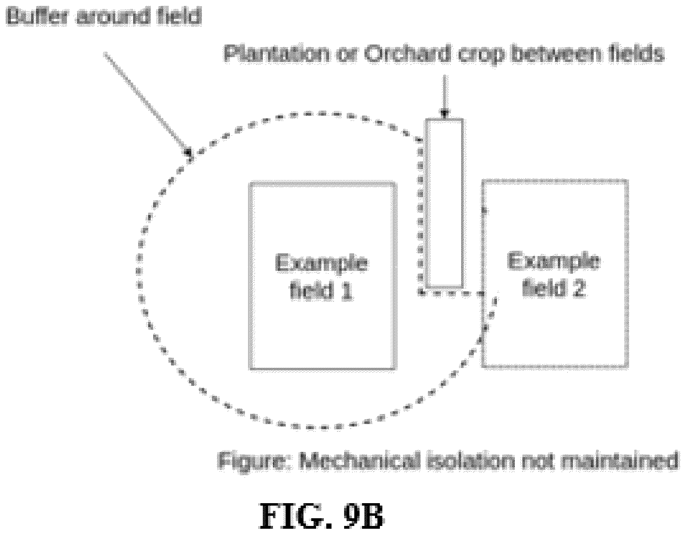

FIG. 9B illustrates a schematic representation of crop plots where mechanical isolation is not maintained, in accordance with an embodiment of the present disclosure.

As seen in FIG. 9B, the plantation or the orchard crop is not fully covering the field 2, thus required mechanical isolation is not maintained between the two fields.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

As discussed earlier, existing methods either needs specialized equipment, or they are associated with high cost and longer time and are also limited to known genetic markers. To overcome the disadvantages, embodiments of the present disclosure provide the method and the system for a large-scale genetic purity estimation and cross-pollination detection in agricultural fields. More specifically, the system uses remote sensing technology, GIS analysis, and meteorological data to assess the risk of cross-pollination, which effectively mitigates cross pollination while ensuring robust contamination detection and seed quality assessment. The system also uses diverse factors, such as historical field suitability, stress assessment, and early detection of genetic anomalies using remote sensing and machine learning algorithms, thereby enhancing the accuracy and reliability of genetic purity estimation while providing valuable insights into the sustainability of seed production practices.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (500), comprising:

receiving (502), by a system via one or more hardware processors, a remote sensing data, a plurality of crop specific isolation distances, a weather data, a historical data, and a soil health data of a region of interest;

determining (504), by the system via the one or more hardware processors, a crop type and a crop variety of each crop plot of one or more crop plots present in a predefined radius of the region of interest based on the remote sensing data using a supervised classification technique;

detecting (506), by the system via the one or more hardware processors, a plurality of phenological stages of a crop planted in each crop plot of the one or more crop plots present in the predefined radius of the region of interest based on the remote sensing data;

classifying (508), by the system via the one or more hardware processors, the plurality of phenological stages of each crop of the one or more crop plots based on one or more vegetation indices using a time-series based classification algorithm, wherein the one or more vegetation indices are predefined, and wherein a timing of flowering phenological stage is determined based on the time-series based classification;

checking (510), by the system via the one or more hardware processors, whether any other crop plot of a same crop type or same crop variety is present within a buffer zone created for the region of interest, wherein the buffer zone is created specific to a crop type or crop variety present in the region of interest based on the plurality of crop specific isolation distances;

upon determining that at least one crop plot of the same crop type or same crop variety is present within the buffer zone, determining (512), by the system via the one or more hardware processors, a spatial isolation distance for the region of interest to check contamination due to at least one of a) same crop type and b) same crop variety, within the buffer zone, wherein the determined spatial isolation distance is used to estimate a spatial distance score based on a predefined spatial distance score calculation technique;

comparing (514), by the system via the one or more hardware processors, the timing of the flowering phenological stage of the at least one crop plot with that of the at least one other crop plot having at least one of a) the same crop type, and b) same crop variety, present in the buffer zone, for identifying a timing overlap in the flowering phenological stage of the at least one crop plot with same crop type or same crop variety in the buffer zone;

upon identifying the timing overlap in the flowering phenological stage, assessing (516), by the system via the one or more hardware processors, a temporal isolation distance for the region of interest, wherein the assessed temporal isolation distance is further utilized to determine a temporal isolation distance score based on a predefined temporal isolation distance score calculation technique;

calculating (518), by the system via the one or more hardware processors, a pollen transfer probability for the region of interest based, at least in part, on the weather data and the remote sensing data, wherein a wind speed and a wind direction present in the weather data and distances between crop plots present outside the buffer zone are analyzed for calculating the pollen transfer probability, and wherein the distances between the crop plots present outside the buffer zone are calculated using the remote sensing data;

detecting (520), by the system via the one or more hardware processors, a plurality of mechanical barriers that restrict pollen transfer between the one or more crop plots present in the predefined radius of the region of interest based on the remote sensing data and the weather data, wherein one or more attributes of each mechanical barrier of the plurality of mechanical barriers are also determined;

determining (522), by the system via the one or more hardware processors, a mechanical isolation distance score based, at least in part, on the one or more mechanical attributes, and the pollen transfer probability; and

calculating (524), by the system via the one or more hardware processors, a contamination score representing contamination happened due to cross-pollination in the region of interest based on the spatial distance score, the temporal isolation distance score, and the mechanical isolation distance score, using a contamination score calculation technique.

2. The processor implemented method (500) as claimed in claim 1, comprising:

performing, by the system via the one or more hardware processors, a field suitability assessment for the region of interest based on the weather data, the historical data and the soil health data to determine a field suitability score (FSS) using a field suitability score estimation technique;

performing, by the system via the one or more hardware processors, a field stress score assessment based on the remote sensing data and one or more ground surveys performed on the region of interest to determine a field stress score (FstS) using a field stress score assessment technique;

detecting, by the system via the one or more hardware processors, one or more deviations in crop characteristics indicative of off-types in the crop planted in each crop plot present in the predefined radius of the region of interest based on the remote sensing data and a ground truth data using a trained convolutional neural network, wherein the ground truth data is predefined, and wherein by identifying the off-types, one or more genetic anomalies that are present in the crop planted in each crop plot present in the predefined radius of the region of interest are identified; and

estimating, by the system via the one or more hardware processors, a genetic purity of seeds of the crop being cultivated on the crop plot in the region of interest based, at least in part, on the contamination score, the FSS score, the FstS score, and the detected one or more deviations indicative of off-types, to determine a genetic purity of seed score representing the genetic purity of seeds of the crop, using a genetic purity score estimation technique.

3. The process implemented method (500) as claimed in claim 2, comprising:

comparing, by the system via the one or more hardware processors, the genetic purity of seed score with a predefined genetic purity threshold;

upon determining that the genetic purity of seed score is above the predefined genetic purity threshold, creating, by the system via the one or more hardware processors, a Non-Fungible Token (NFT) for each of one or more packets of seed cultivated in the region of interest; and

generating, by the system via the one or more hardware processors, a genetic purity certificate for each of one or more packets of seed, based on the created NFT.

4. The processor implemented method (500) as claimed in claim 1, wherein,

the remote sensing data comprises at least one of a satellite imagery and an aerial photography of the region of interest,

the weather data comprises a historical, a current, and a forecasted weather data of the region of interest,

the historical data comprises information about historical crop rotations, crop stresses that are observed due to crop rotations, and management operations that are performed on the region of interest, and

the soil health data comprises a soil fertility details, pH level, and nutrient content information of soil present in the area of interest.

5. A system (102), comprising:

a memory (202) storing instructions;

one or more communication interfaces (206); and

one or more hardware processors (204) coupled to the memory (202) via the one or more communication interfaces (206), wherein the one or more hardware processors (204) are configured by the instructions to:

receive a remote sensing data, a plurality of crop specific isolation distances, a weather data, a historical data and a soil health data of a region of interest;

determine a crop type and a crop variety of each crop plot of one or more crop plots present in a predefined radius of the region of interest based on the remote sensing data using a supervised classification technique;

detect a plurality of phenological stages of a crop planted in each crop plot of the one or more crop plots present in the predefined radius of the region of interest based on the remote sensing data;

classify the plurality of phenological stages of each crop of the one or more crop plots based on one or more vegetation indices using a time-series based classification algorithm, wherein the one or more vegetation indices are predefined, and wherein a timing of flowering phenological stage is determined based on the time-series based classification;

check whether any other crop plot of a same crop type or same crop variety is present within a buffer zone created for the region of interest, wherein the buffer zone is created specific to a crop type or crop variety present in the region of interest based on the plurality of crop specific isolation distances;

upon determining that at least one crop plot of the same crop type or same crop variety is present within the buffer zone, determine a spatial isolation distance for the region of interest to check contamination due to at least one of a) same crop type and b) same crop variety, within the buffer zone, wherein the determined spatial isolation distance is used to estimate a spatial distance score based on a predefined spatial distance score calculation technique;

compare the timing of the flowering phenological stage of the at least one crop plot with that of the at least one other crop plot having at least one of a) the same crop type and b) the same crop variety present in the buffer zone, for identifying a timing overlap in the flowering phenological stage of the at least one crop plot with same crop type or same crop variety in the buffer zone;

upon identifying the timing overlap in the flowering phenological stage, assess a temporal isolation distance for the region of interest, wherein the assessed temporal isolation distance is further utilized to determine a temporal isolation distance score based on a predefined temporal isolation distance score calculation technique;

calculate a pollen transfer probability for the region of interest based, at least in part, on the weather data and the remote sensing data, wherein a wind speed and a wind direction present in the weather data and distances between crop plots present outside the buffer zone are analyzed for calculating the pollen transfer probability, and wherein the distances between the crop plots present outside the buffer zone are calculated using the remote sensing data;

detect a plurality of mechanical barriers that restrict pollen transfer between the one or more crop plots present in the predefined radius of the region of interest based on the remote sensing data and the weather data, wherein one or more attributes of each mechanical barrier of the plurality of mechanical barriers are also determined;

determine a mechanical isolation distance score based, at least in part, on the one or more mechanical attributes, and the pollen transfer probability; and

calculate a contamination score representing contamination happened due to cross-pollination in the region of interest based on the spatial distance score, the temporal isolation distance score and the mechanical isolation distance score using a contamination score calculation technique.

6. The system (102) as claimed in claim 5, wherein the one or more hardware processors (204) are configured by the instructions to:

perform a field suitability assessment for the region of interest based on the weather data, the historical data and the soil health data to determine a field suitability score (FSS) using a field suitability score estimation technique;

perform a field stress score assessment based on the remote sensing data and one or more ground surveys performed on the region of interest to determine a field stress score (FstS) using a field stress score assessment technique;

detect one or more deviations in crop characteristics indicative of off-types in the crop planted in each crop plot present in the predefined radius of the region of interest based on the remote sensing data and a ground truth data using a trained convolutional neural network, wherein the ground truth data is predefined, and wherein by identifying the off-types, one or more genetic anomalies that are present in the crop planted in each crop plot present in the predefined radius of the region of interest are identified; and

estimate a genetic purity of seeds of the crop being cultivated on the crop plot in the region of interest based, at least in part, on the contamination score, the FSS score, the FstS score and the detected one or more deviations indicative of off-types, to determine a genetic purity of seed score representing the genetic purity of seeds of the crop using a genetic purity score estimation technique.

7. The system (102) as claimed in claim 5, wherein the one or more hardware processors (204) are configured by the instructions to:

compare the genetic purity of seed score with a predefined genetic purity threshold;

upon determining that the genetic purity of seed score is above the predefined genetic purity threshold, creating, by the system via the one or more hardware processors, a Non-Fungible Token (NFT) for each of one or more packets of seed cultivated in the region of interest; and

generate a genetic purity certificate for each of one or more packets of seed, based on the created NFT.

8. The system (102) as claimed in claim 5, wherein

the remote sensing data comprises at least one of a satellite imagery or an aerial photography of the region of interest,

the weather data comprises a historical, a current, and a forecasted weather data of the region of interest,

the historical data comprises information about historical crop rotations, crop stresses that are observed due to crop rotations and management operations that are performed on the region of interest, and

the soil health data comprises a soil fertility details, pH level, and nutrient content information of soil present in the area of interest.

9. One or more non-transitory machine-readable information storage mediums comprising one or more instructions which when executed by one or more hardware processors cause:

receiving a remote sensing data, a plurality of crop specific isolation distances, a weather data, a historical data,

and a soil health data of a region of interest;

determining a crop type and a crop variety of each crop plot of one or more crop plots present in a predefined radius of the region of interest based on the remote sensing data using a supervised classification technique;

detecting a plurality of phenological stages of a crop planted in each crop plot of the one or more crop plots present in the predefined radius of the region of interest based on the remote sensing data;

classifying the plurality of phenological stages of each crop of the one or more crop plots based on one or more vegetation indices using a time-series based classification algorithm, wherein the one or more vegetation indices are predefined, and wherein a timing of flowering phenological stage is determined based on the time-series based classification;

checking whether any other crop plot of a same crop type or same crop variety is present within a buffer zone created for the region of interest, wherein the buffer zone is created specific to a crop type or crop variety present in the region of interest based on the plurality of crop specific isolation distances;

upon determining that at least one crop plot of the same crop type or same crop variety is present within the buffer zone, determining a spatial isolation distance for the region of interest to check contamination due to at least one of a) same crop type and b) same crop variety, within the buffer zone, wherein the determined spatial isolation distance is used to estimate a spatial distance score based on a predefined spatial distance score calculation technique;

comparing the timing of the flowering phenological stage of the at least one crop plot with that of the at least one other crop plot having at least one of a) the same crop type, and b) same crop variety, present in the buffer zone, for identifying a timing overlap in the flowering phenological stage of the at least one crop plot with same crop type or same crop variety in the buffer zone;

upon identifying the timing overlap in the flowering phenological stage, assessing a temporal isolation distance for the region of interest, wherein the assessed temporal isolation distance is further utilized to determine a temporal isolation distance score based on a predefined temporal isolation distance score calculation technique;

calculating a pollen transfer probability for the region of interest based, at least in part, on the weather data and the remote sensing data, wherein a wind speed and a wind direction present in the weather data and distances between crop plots present outside the buffer zone are analyzed for calculating the pollen transfer probability, and wherein the distances between the crop plots present outside the buffer zone are calculated using the remote sensing data;

detecting a plurality of mechanical barriers that restrict pollen transfer between the one or more crop plots present in the predefined radius of the region of interest based on the remote sensing data and the weather data, wherein one or more attributes of each mechanical barrier of the plurality of mechanical barriers are also determined;

determining a mechanical isolation distance score based, at least in part, on the one or more mechanical attributes, and the pollen transfer probability; and

calculating a contamination score representing contamination happened due to cross-pollination in the region of interest based on the spatial distance score, the temporal isolation distance score, and the mechanical isolation distance score, using a contamination score calculation technique.

**10.** The one or more non-transitory machine-readable information storage mediums as claimed in claim 9, comprising:

performing, by the system a field suitability assessment for the region of interest based on the weather data, the historical data and the soil health data to determine a field suitability score (FSS) using a field suitability score estimation technique;

performing, by the system a field stress score assessment based on the remote sensing data and one or more ground surveys performed on the region of interest to determine a field stress score (FstS) using a field stress score assessment technique;

detecting, by the system one or more deviations in crop characteristics indicative of off-types in the crop planted in each crop plot present in the predefined radius of the region of interest based on the remote sensing data and a ground truth data using a trained convolutional neural network, wherein the ground truth data is predefined, and wherein by identifying the off-types, one or more genetic anomalies that are present in the crop planted in each crop plot present in the predefined radius of the region of interest are identified; and

estimating, by the system a genetic purity of seeds of the crop being cultivated on the crop plot in the region of interest based, at least in part, on the contamination score, the FSS score, the FstS score, and the detected one or more deviations indicative of off-types, to determine a genetic purity of seed score representing the genetic purity of seeds of the crop, using a genetic purity score estimation technique.

**11.** The one or more non-transitory machine-readable information storage mediums as claimed in claim 10, comprising:

comparing, by the system the genetic purity of seed score with a predefined genetic purity threshold;

upon determining that the genetic purity of seed score is above the predefined genetic purity threshold, creating, by the system a Non-Fungible Token (NFT) for each of one or more packets of seed cultivated in the region of interest; and

generating, by the system a genetic purity certificate for each of one or more packets of seed, based on the created NFT.

12. The one or more non-transitory machine-readable information storage mediums as claimed in claim 9, wherein,

the remote sensing data comprises at least one of a satellite imagery and an aerial photography of the region of interest,

the weather data comprises a historical, a current, and a forecasted weather data of the region of interest,

the historical data comprises information about historical crop rotations, crop stresses that are observed due to crop rotations, and management operations that are performed on the region of interest, and

the soil health data comprises a soil fertility details, pH level, and nutrient content information of soil present in the area of interest.

**FIG. 1**

100

**FIG. 2**

3. Gathering field boundary of seeds plots, satellite data around the seed plot and weather datasets (historical and current data)

4. Early Detection of Off-Types
5. Estimation of crop phenological stages using satellite data

9. Detection of mechanical barriers around the seed plots and correction for the spatial isolation distance considering wind attributes and mechanical barriers

10. Estimation of score based on contamination due to cross-pollination

PLOT-C   PLOT-A

PLOT-B

6. Assessment of spatial isolation to check contamination due to same crop/variety within the buffer distance

7. Assessment of temporal isolation based on overlap of flowering period (determined based on phenological stages) between crop/varieties

11. Gathering PLOT attributes like historical crops, cultivation practices, soil, crop, weather datasets and real-time data
12. Estimation of field suitability assessment score
13. Estimation of field stress score
14. Early detection of off-types
15. Estimation of genetic purity of seeds score

2. SEED VILLAGE, Crop Plots (of different crop or different varieties)

1. Seed and sowing process

5. Knowledge Layer
Seed domain Knowledge Graph

8. Assessment of contamination due to higher wind speed and wind direction - estimation of probable spatial spread of pollens from the neighboring plots due to wind speed

Crate NFT of Seed Purity Certificate

**FIG. 3**

FIG. 4

receiving, by a system via one or more hardware processors, a remote sensing data, a plurality of crop specific isolation distances, a weather data, a historical data and a soil health data of a region of interest — 502

↓

determining, by the system via the one or more hardware processors, a crop type and a crop variety of each crop plot of one or more crop plots present in in a predefined radius of the region of interest based on the remote sensing data using a supervised classification technique — 504

↓

detecting, by the system via the one or more hardware processors, a plurality of phenological stages of a crop planted in each crop plot of the one or more crop plots present in the predefined radius of the region of interest based on the remote sensing data — 506

↓

classifying, by the system via the one or more hardware processors, the plurality of phenological stages of each crop of the one or more crop plots based on one or more vegetation indices using a time-series based classification algorithm, wherein the one or more vegetation indices are predefined, and wherein a timing of flowering phenological stage is determined based on the time-series based classification — 508

↓

A

500

**FIG. 5A**

```
        │
        ▼
       ⟨A⟩
        │
        ▼
```

checking, by the system via the one or more hardware processors, whether any other crop plot of a same crop type or same crop variety is present within a buffer zone created for the region of interest, wherein the buffer zone is created specific to a crop type or crop variety present in the region of interest based on the plurality of crop specific isolation distances — 510

upon determining that at least one crop plot of the same crop type or same crop variety is present within the buffer zone, determining, by the system via the one or more hardware processors, a spatial isolation distance for the region of interest to check contamination due to at least one of a) same crop type and b) same crop variety within the buffer zone, wherein the determined spatial isolation distance is used to estimate a spatial distance score based on a predefined spatial distance score calculation technique — 512

comparing, by the system via the one or more hardware processors, the timing of the flowering phenological stage of the at least one crop plot with that of the at least one other crop plot having at least one of a) the same crop type and b) same crop variety present, in the buffer zone, for identifying a timing overlap in the flowering phenological stage of the at least one crop plot with same crop type or same crop variety in the buffer zone — 514

upon identifying the timing overlap in the flowering phenological stage, assessing, by the system via the one or more hardware processors, a temporal isolation distance for the region of interest, wherein the assessed temporal isolation distance is further utilized to determine a temporal isolation distance score based on a predefined temporal isolation distance score calculation technique — 516

```
        │
        ▼
       ⟨B⟩
        │         ↖ 500
        ▼
```

**FIG. 5B**

```
          ┌───┐
          │ B │
          └───┘
```

calculating, by the system via the one or more hardware processors, a pollen transfer probability for the region of interest based, at least in part, on the weather data and the remote sensing data, wherein a wind speed and a wind direction present in the weather data and distances between crop plots present outside the buffer zone are analyzed for calculating the pollen transfer probability, and wherein the distances between the crop plots present outside the buffer zone are calculated using the remote sensing data          518

detecting, by the system via the one or more hardware processors, a plurality of mechanical barriers that restrict pollen transfer between the one or more crop plots present in the predefined radius of the region of interest based on the remote sensing data and the weather data, wherein one or more attributes of each mechanical barrier of the plurality of mechanical barriers are also determined          520

determining, by the system via the one or more hardware processors, a mechanical isolation distance score based, at least in part, on the one or more mechanical attributes, and the pollen transfer probability          522

calculating, by the system via the one or more hardware processors, a contamination score representing contamination happened due to cross-pollination in the region of interest based on the spatial distance score, the temporal isolation distance score and the mechanical isolation distance score using a contamination score calculation technique          524

**FIG. 5C**

500

**FIG. 6**

Figure: Spatial isolation maintained

FIG. 7A

Figure: Spatial isolation not maintained

FIG. 7B

FIG. 8A

Figure: Temporal isolation not maintained

FIG. 8B

Plantation or Orchard crop between fields

Example field 1

Example field 2

Figure: Mechanical isolation maintained

Buffer around field

FIG. 9A

Buffer around field

Plantation or Orchard crop between fields

Example field 1

Example field 2

Figure: Mechanical isolation not maintained

**FIG. 9B**

**EUROPEAN SEARCH REPORT**

Application Number

EP 25 19 9248

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2018/373932 A1 (ALBRECHT CONRAD M [US] ET AL) 27 December 2018 (2018-12-27) * paragraphs [0055] - [0059], [0113] - [0115], [0140] * | 1-12 | INV. G06Q30/018 A01B79/00 G06Q50/02 G06V20/10 |
| A | ANGEVIN ET AL: "Modelling impacts of cropping systems and climate on maize cross-pollination in agricultural landscapes: The MAPOD model", EUROPEAN JOURNAL OF AGRONOMY, ELSEVIER, AMSTERDAM, NL, vol. 28, no. 3, 4 January 2008 (2008-01-04), pages 471-484, XP022486787, ISSN: 1161-0301, DOI: 10.1016/J.EJA.2007.11.010 * chapter 2; figure 1 * | 1-12 | |
| A | Reuter Hauke ET AL: "Modelling maize cross-pollination probabilities on the regional levelexemplary simulations for the county Elbe Elster in Brandenburg, Germany", , 1 January 2008 (2008-01-01), XP093354193, Retrieved from the Internet: URL:https://www.researchgate.net/publication/228497685_Modelling_maize_cross-pollination_probabilities_on_the_regional_level_-_exemplary_simulations_for_the_county_Elbe_Elster_in_Brandenburg_Gemany * pages 55,56; figures 1,2 * | 1-12 | TECHNICAL FIELDS SEARCHED (IPC) G06Q A01B G06V |

The present search report has been drawn up for all claims

| Place of search | Date of completion of the search | Examiner |
|---|---|---|
| Munich | 16 January 2026 | Liendl, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 25 19 9248

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2026

| Patent document cited in search report | Publication date | Patent family member(s) | Publication date |
|---|---|---|---|
| US 2018373932 A1 | 27-12-2018 | US 2018373932 A1 | 27-12-2018 |
| | | US 2020226375 A1 | 16-07-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421069145